(19) Europäisches Patentamt
European Patent Office
Office européen des brevets

(11) EP 2 244 432 A1

(12) **EUROPEAN PATENT APPLICATION**

(43) Date of publication:
27.10.2010 Bulletin 2010/43

(51) Int Cl.:
*H04L 25/02* [(2006.01)]   *H04L 25/03* [(2006.01)]
*H04L 27/26* [(2006.01)]

(21) Application number: 09158674.3

(22) Date of filing: 24.04.2009

(84) Designated Contracting States:
AT BE BG CH CY CZ DE DK EE ES FI FR GB GR
HR HU IE IS IT LI LT LU LV MC MK MT NL NO PL
PT RO SE SI SK TR

(71) Applicant: Vodafone Holding GmbH
40213 Düsseldorf (DE)

(72) Inventors:
• Holfeld, Jörg
01187, Dresden (DE)

• Ohlmer, Eckhard
01309, Dresden (DE)
• Habendorf, René
01277, Dresden (DE)

(74) Representative: Bosch, Matthias
Bosch Jehle
Patentanwaltsgesellschaft mbH
Flüggenstrasse 13
80639 München (DE)

(54) **Compensating carrier frequency offsets in OFDM systems**

(57)     In an OFDM system a plurality of subcarriers interferes with a considered subcarrier in case of carrier frequency offsets. A method and a corresponding receiver topology are disclosed for reducing the interference caused by frequency offsets of the subcarriers, wherein in a decision feedback equalizer the resources for computing the interference of subcarriers are adaptively allocated, such that only the most interfering subcarriers are considered when subtracting the interfering symbols from considered subcarrier symbols.

Fig. 1

EP 2 244 432 A1

**Description**

Background of the invention

The invention relates to a method and a corresponding receiver for compensating carrier frequency offsets in OFDM systems.

Since the advent of the orthogonal frequency division modulation (OFDM) scheme, it has been used in various transmission systems for dealing with so-called frequency selective fading and for transmitting large amounts of digital data. In an OFDM scheme an available frequency band of limited bandwidth is split up into a plurality of *I* smaller frequency bands, wherein each of the smaller frequency bands forms a so-called subchannel. The center frequency of each subchannel is used as carrier, a so-called subcarrier, wherein the modulation is chosen such that the modulated subcarrier wave does not exceed the bandwidth of the subchannel.

In this way each of the *I* subchannels can be used for transmitting data by modulating the subcarriers using a conventional modulation method at a comparatively low symbol rate, such that the modulated subcarrier does not exceed the bandwidth of the subchannel band. As a consequence the duration for transmitting one symbol over a subchannel is extended by factor *I* in comparison to a single carrier transmission system using the entire available bandwidth. Due to the longer duration for transmitting one symbol, each subcarrier's signal is likely to remain unaffected by multipath propagation.

Each of the *I* subchannels can be used independently. Hence, the data to be transmitted via the subchannels may originate from a single source or from a plurality of independent sources. In case the data originate from a single source, the single data stream is passed through a serial-to-parallel converter for splitting the single input stream into a plurality of *I* parallel output streams for transmitting these streams at the same time through a corresponding plurality of *I* parallel subchannels.

Alternatively the data to be transmitted may originate from a plurality of independent sources, such that each of the subchannels can be used for transmitting unrelated data. Hence, each subcarrier may be used by a different transmitter for transmitting arbitrary data.

In still another embodiment the OFDM system can be a cell phone system comprising a plurality of cells, each provided by a receiver station, i.e. a so-called base station or node-B. The available frequency band in the cell is divided into a plurality of subchannels forming an OFDM transmission system, wherein the center frequency of each subchannel may be used as carrier frequency, i.e. a subcarrier. A plurality of independent transmitters, which may be cell phones or PDAs or other computers, are assigned to the receiver station for data exchange. The plurality of independently operating transmitter stations use the plurality of subcarriers, wherein more than one transmitter station may use one subcarrier simultaneously, i.e. one subcarrier may be used by more than one transmitter station. At the receiver station, transmitter stations, i.e. the signals of the transmitters using the same subcarrier and the same symbol set can be distinguished using spatial layer detection. Spatial layer detection schemes make use of multipath propagation for distinguishing the transmitters.

In any case, i.e. regardless of the data origin, the plurality of subcarrier frequencies - in an ideal system - is modulated such that the subcarriers do not interfere with each other, i.e. any inter channel or intercarrier interference (ICI) is avoided.

At the receiver side a superposition of complex OFDM signals is received, wherein the received signal is a superposition of the subcarrier signals superimposed by noise and other interfering signals. In the receiver the received OFDM signal is demultiplexed into the plurality of subcarrier frequency bands. Each modulated subcarrier is then demodulated to generate a data stream from each of the subcarriers. In case the transmitted data originate from a single data source, the data streams related to the subcarriers may be recombined to from a data stream corresponding to the original data source. In case the subcarriers originate from independent sources, the demodulated independent data streams may be further processed independently.

This scheme of splitting an available frequency bandwidth into a plurality of subchannels and using each subchannel for transmitting data has many advantages and has been improved during the last decades. For example the implementation complexity has been reduced by deploying the fast Fourier transformation (FFT) and the corresponding inverse fast Fourier trans (IFFT), which allows to modulate a plurality of subchannels onto the subcarriers in a single processing step.

The subcarriers are called orthogonal if - under ideal conditions - they do not interfere with each other, i.e. if there is no inter channel interference (ICI). The frequencies of the subchannels and their bandwidth are chosen non-overlapping. As a consequence in the frequency domain all spectra of the subcarriers exhibit zero-crossings at all of the neighboring subcarrier frequencies. Consequently all of these subcarriers are orthogonal to each other, i.e. they do not interfere with each other.

The property of ideal orthogonality requires that their frequency bands do not overlap. However, this property exists in ideal examples only. In real world applications there may be a frequency offset between the subcarrier frequencies. As a consequence the subcarriers are not perfectly orthogonal to each other, such that the subcarriers interfere with each other.

Offsets between orthogonal subcarriers, such that these are not perfectly orthogonal but interfere with each other, may have different origins. In one embodiment, which particularly is related to wireless communications and wherein the communication system implements an OFDM system, each mobile terminal uses at least one subcarrier and employs its own local oscillator. The output frequencies of these oscillators may deviate from an ideal frequency for example due to production variances. Another source for carrier frequency offsets is the Doppler effect caused by moving mobile stations.

These offsets for example can be prevented by using synchronization means. In one example each oscillator can be synchronized to a precise and available clock signal, for example that of the global positioning system (GPS). Alternatively the IEEE 1588 time protocol could be used to synchronize an oscillator. In any case, employing any one of these additional means requires additional effort and costs.

Accordingly there is a need for a reliable and cost effective solution to handle the impact of carrier frequency offsets.

Brief description of the figures

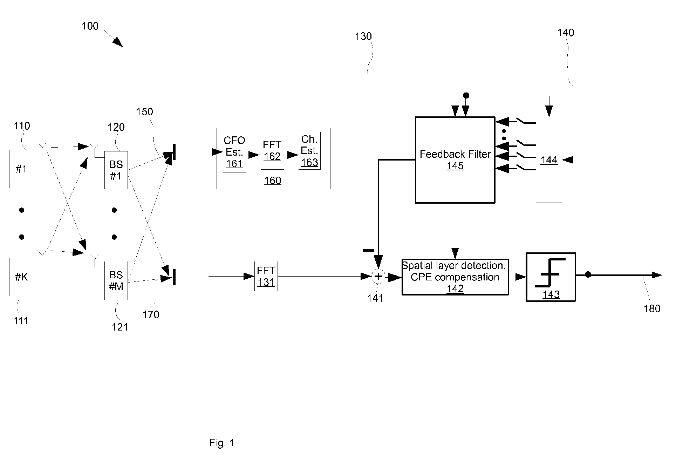

Fig. 1     depicts a topology for implementing the proposed method

Detailed description of the invention

The present invention will now be described in detail with reference to a few preferred embodiments thereof as illustrated in the accompanying drawing. In the following description, numerous specific details are set forth in order to provide a thorough understanding of the present invention. It will be apparent, however, to one skilled in the art, that the present invention may be practiced without some or all of these specific details. In other instances, well known processes and steps have not been described in detail in order not to unnecessarily obscure the present invention.

Figure 1 depicts a first embodiment illustrating a topology 100 for wireless transmission of data, comprising a plurality of a number of $K$ transmitter stations 110 to 111, wherein one station is indexed by $k$. In one embodiment the transmitters 110, 111 may be mobile stations or fixed transmitter stations, i.e. stations that do not move. Mobile stations may be cell phones or PDAs or movable laptop computers or any other equipment capable of communicating with the receiving station. The fixed stations may be PCs, which usually do not move during operation, i.e. during communication with the receiving station.

A plurality of M receiver stations 120, 121 receives the signals transmitted by the $K$ transmitter stations 110 to 111. A receiver station or a receiving branch of the receiving entity is indexed by $m$. Each of the receiver stations receives the signals transmitted by each of the $K$ transmitters. Accordingly each receiver station may receive $K$ signals simultaneously. Generally the receiver stations 120, 121 may form part of any arbitrary OFDM system. In one embodiment the receiver stations may be base stations of a cell phone system, in which a plurality of mobile users, i.e. each with a cell phone or equivalent equipment, transmits data to at least one base station.

Note that although the description describes the transmission of information from stations 110, 111 to receiving stations 120, 121 a person skilled in the art is well aware that communication may be performed also in the opposite transmission direction, i.e. from a base station to a particular transmitter station.

According to the general understanding of an OFDM system the transmission of information from the stations 110, 110 to the receiver stations 120, 121 is separated by frequency. That is, each transmitter station 110, 111 employs one of a plurality of $D$ orthogonal frequencies. These frequencies are called subcarrier frequencies, or simply subcarriers. In an ideal system the subcarriers do not interfere with each other, i.e. they are perfectly orthogonal.

However, as mentioned above, transmitters may operate independently. An individual transmitter may accordingly transmit its individual signal at an arbitrary time. Consequently, in the plurality of $K$ transmitters at least two or more of them may transmit at the same time. In that case each of the $M$ receiver stations will receive a plurality of these signals at the same time.

Note that - as mentioned above - more than one transmitter station may use a subcarrier at the same time, i.e. the described communications system may be a multiuser MIMO OFDM system. These transmitter signals are separated at the receiving entity using conventional spatial layer detection. In the following a subcarrier is denoted by $l$, wherein $l \in D$,

Each of the transmitters 110, 111 comprises a local oscillator providing the individual carrier frequency for said transmitter, which for the $k$-th transmitter may be denoted as $e^{j\varphi_{k,T}}$. Each local oscillator may deviate from the tuned subcarrier frequency, for example due to production tolerances. Similar to a transmitter, each receiving station may have its local oscillator, which for the m-th transmitter or m-th receiving branch of the M receivers is given as $e^{j\varphi_{m,R}}$. The

provided carrier frequency and accordingly the signal as received by the receiving stations 120, 121 may have a carrier frequency offset, abbreviated as CFO. The resulting phase rotation in time domain between the $k$-th transmitter $T$ and the $m$-th receiver branch $R$ accordingly is $e^{j(\varphi_{k,T} - \varphi_{m,R})}$.

Another source causing a carrier frequency offset at the receiving station may be the motion of a mobile station, i.e. the Doppler effect caused by the motion of the transmitter.

Each of the spatial links in the OFDM system accordingly may exhibit an individual carrier frequency offset, such that each of the receiving stations has to process a plurality of subcarrier frequencies each having an individual carrier frequency offset. As a consequence of the plurality of offsets, the subcarriers are not perfectly orthogonal, such that they interfere with each other. That is, each subcarrier differs from its ideal frequency thus distorting other subcarriers and at the same time is distorted itself by other subcarriers, which also deviate from their carrier frequency by a frequency offset.

The processing of the received subcarriers at the receiver station 120 aims at reproducing the transmitted data from the received subcarriers as best as possible while taking into account, that the subcarriers are not perfectly orthogonal to each other, the signals thus interfering with each other. In order to optimize the processing of the received subcarrier frequencies the receiver station employs a method for eliminating or at least reducing the interference on a subcarrier signal caused by the frequency offset of at least one other subcarrier. In a first step the interference of subcarrier frequencies caused on one particular subcarrier frequency is calculated. Subsequently the carrier frequencies exhibiting the strongest interferences are determined. These carrier frequencies are then selected to be taken into account for further processing. In particular the subcarrier frequencies exhibiting the biggest carrier frequency offsets and accordingly strongest interference on the one desired subcarrier are determined, and the interference of these determined subcarriers is subtracted from a desired frequency for improving the processing of the received desired signal.

In the following said method is described with reference to block 130, which depicts a block diagram of a central processing entity comprising a carrier frequency offset compensation block 140 for performing the method. In this topology a plurality of M receiver stations 120, 121 is communicatively coupled to one central processing entity 130, which processes the received signals of a plurality of receiving stations. Generally the method as described hereinafter may be performed also in other topologies, wherein for example one processing entity 130 is coupled to only one receiving station 120.

Note that receiver stations 120, 121 do not individually demodulate received signals. Instead each base station forwards its received signals to a central processing entity 130. In one embodiment a receiver station may be implemented by a so-called base station (BS), wherein a base station may perform some basic processing of a received signal such as baseband processing.

Each of the receiver stations 120, 121 passes synchronization data 150 to a synchronization unit 160 for further processing, wherein synchronization unit 160 may comprise a processing block 161 for estimating the carrier frequency offset, an FFT processing block 162 for computing a Fast Fourier Transformation of the received signal and a Channel Estimator block 163 for estimating channel coefficients. Synchronization unit 160 accordingly passes synchronization data, i.e. the carrier frequency offsets of received subcarriers and estimated channel coefficients to block 140 in a frequency domain representation. Synchronization data may comprise so-called protocol overhead data, i.e. in one embodiment training data for training equalizers in the receivers. The synchronization units estimate channel coefficients of all allocated subcarriers and pass this information to block 140, i.e. to the Joint Detection and Carrier Frequency Offset Compensation block 140, in particular to Feedback filter 145 comprised in said block 140. Feedback filter 145 accordingly receives information about channel characteristics of all considered channels, wherein two or more channels may be related to one subcarrier.

Frequency offset estimator block 161 estimates the frequency offset of allocated subcarriers and passes the estimated frequency offset of the received subcarriers to Fast Fourier Transformation block 162 and also to Feedback Filter block 145.

Fast Fourier Transformation block 162 transforms the data received from CFO block 161 into corresponding data in frequency domain, which is forwarded to channel estimation block 163.

Channel estimation block 163 estimates the channel coefficients of received subcarriers and forwards this information to feedback filter 145, i.e. block 163 passes information characterizing the subchannels to filter 145.

Receiver stations 120, 121 furthermore provide subcarriers representing user data to central processing unit 130 via path 170, In contrast to synchronization data user data represent the information a user intended to transmit as payload data. In central processing unit 130 incoming user data is transformed into frequency domain by a corresponding processing block 131, i.e. by a fast Fourier transformation (FFT) block 131. The user data in frequency domain representation is then passed to the joint detection and carrier frequency offset compensation block 140, in particular to the forward path of a decision feedback equalizer (DFE) comprised in block 140.

The forward path processes the user data in frequency domain representation to estimate the user data, that a user intentionally transmitted, i.e. the payload data a user transmitted. Said user data in one embodiment may be represented by the I/Q values of a symbol in a signal constellation or may be represented by the bits, wherein the bits in a conventional way can be mapped to symbols of a signal constellation. Output 180 of the forward path of the DFE accordingly is the estimated user data, which may be in frequency domain representation.

Said forward path of the DFE in one embodiment may comprise an adder 141, a spatial layer detection and common phase error compensation block 142 and an estimator block 143. The user data in frequency domain representation are coupled to adder 141, which is furthermore communicatively coupled to feedback filter 145, for subtracting output from said filter from the user data. Adder 141 then forwards the - manipulated - user data to spatial layer detection and common phase error compensation block 142, which determines the user data symbols from the received subcarriers.

As explained later on, adder 141 also receives input from feedback filter 145 for subtracting that from the user data as received from FFT block 131. Adder 141 passes its output to a spatial layer detection and common phase error compensation block 142.

Spatial layer detection and common phase error compensation block 142 processes its received input to determine the user data, i.e. the symbols as transmitted by each subcarrier. Block 142 furthermore receives frequency offsets and estimated channel coefficients of subcarriers from synchronization block 160, either via a direct coupling or - as illustrated in the figure - via feedback filter 145. Based on the information provided from filter 145 and on the received user data block 142 compensates a common phase error of received user data and equalizes user data transmitted on subcarriers. In one embodiment, when the communication system is a multiuser MIMO-OFDM system, block 142 also performs a spatial layer detection on its received input to detect user data transmitted on the same subcarrier.

The user data detected from the subcarriers, i.e. symbol estimates of user data, is then passed to estimator block 143 for determining the most probable user data. In one embodiment estimator 143 in a conventional way calculates the smallest Euclidean distance between a transmitted symbol and symbols of a used signal constellation. The user data, i.e. the symbols as determined by estimator 143, then is forwarded as indicated by the arrow 180 to arbitrary processing blocks.

In the following description it is assumed estimator block 143 outputs the user data as symbols, i.e. as in-phase I and quadrature values Q of the symbols. As these I/Q values can be mapped easily to a sequence of bits by applying a signal constellation to the I/Q values of a symbol, a representation of the user data as a bit sequence is considered to be equivalent.

Besides being output the estimated user data is forwarded to subcarrier selection block 144 as input. Based on the carrier frequency offset as provided by block 161 and based on the provided user data symbols, subcarrier selection block 144 calculates the interference of subcarriers related to a considered subcarrier, selects the most interfering subcarrier symbols and forwards only the selected subset of subcarrier symbols to feedback filter 145 for further processing. More particularly block 144 calculates the interference power of all subcarriers taken as input and also calculates the total interference power of all subcarriers. Based on these calculations the subcarriers exhibiting the highest relative interference power are selected as the most interfering subcarriers. Subcarrier selection block 144 forwards only the selected subcarriers to filter 145 for further processing.

In one embodiment the most adjacent subcarriers are considered for calculating the most interfering subcarriers with regard to a considered subcarrier. Accordingly the selection of subcarriers forwarded may be all or a selection of the most adjacent subcarriers.

As indicated by the switches drawn between subcarrier selection block 144 and feedback filter 145 only a subset of the subcarrier symbols as output by estimator 143 is forwarded to feedback filter 145. Based on these selected symbols and based on the carrier frequency offsets as provided by block 161 and based on the channel coefficients as provided by channel estimator block 163, feedback filter 145 calculates the interfering signals in frequency domain representation. Since only a subset of the subcarrier symbols is passed to filter 145, the processing power required for the calculation of the interfering signals can be dynamically allocated in order to optimize system performance of the receiver.

Vice versa the number of considered subcarriers can be adjusted according to an available and allocated processing power. In systems having limited processing power, a predefined quota of processing power may be allocated for calculating interfering signals in filter 145, and selection block 144 accordingly selects a number of most interfering subcarrier symbols, thus achieving an optimal equalization.

The signals calculated by filter 145 are passed to adder 141, which subtracts these interfering signals from the signals as received from FFT block 131. In this way the input of processing block 142 exhibits reduced interference, wherein particularly interference caused by carrier frequency offsets (CFOs) is reduced.

In one embodiment a plurality of operation cycles may be performed, such that reducing the interference of the user data is reduced iteratively.

The decision feedback loop comprising selection block 144 and filter 145 in this way receives a plurality of OFDM subcarrier signals, estimates the symbols of user data of the subcarriers, estimates an interference on one subcarrier caused by received subcarriers, selects from the plurality of received subcarriers at least the most interfering subcarrier and subtracts the estimated interference of the at least selected subcarrier from the one received subcarrier signal.

By subtracting the calculated interfering signals from the user data signals as received from FFT block 131, adder 141 provides manipulated user data to block 142. Based on these manipulated user data the processing blocks in the forward path of the DFE again determine symbols of the user data, wherein these symbols exhibit less distortion caused by carrier frequency offsets. Accordingly estimator block 143 is capable to estimate the symbols more accurately, while at the same time the processing resources available in central processing unit 130, particularly in the joint detection and carrier frequency offset compensation block 140.

In this way the described feedback loop describes a decision feedback equalizer (DFE) for eliminating or at least reducing the interchannel interference caused by carrier frequency offsets in subcarriers of an OFDM communication system by performing the steps of receiving a plurality of OFDM subcarrier signals in the receiver, estimating symbols of the subcarriers, estimating an interference on one subcarrier caused by received subcarriers, selecting from the plurality of received subcarriers at least the most interfering subcarrier, subtracting the estimated interference of the at least selected subcarrier from the received subcarrier signals thus producing subcarrier signals of reduced interference, and estimating symbols of the subcarrier signals of reduced interference.

In the following the mathematical background for the described method for eliminating or at least reducing the interference caused by the carrier frequency offsets is described.

The described topology may be considered a general OFDM system wherein a number of $K$ active users, each denoted by an index $k$, simultaneously transmit data on a subset of a number of $D$ subcarriers, then the time domain representation on the base band signal for a particular user $k$ can be denoted as an inverse discrete Fourier transformation (IDFT)

$$\underline{s}_i^k[n] = \frac{1}{\sqrt{N}} \sum_{l \in D} \underline{X}_i^k[l] \mathrm{e}^{\frac{j2\pi ln}{N}} \quad 0 \leq n \leq N-1 \qquad (1)$$

wherein $\underline{X}_i^k[l] = 0 \;\; \forall \, l \notin D$ and N represents the DFT size. The OFDM symbol index is given by $i = 0,..., N_S$. After the transmission over the channel, wherein the channel can be described by its impulse response vector $\underline{h}$ consisting of $N_{CIR}$ discrete channel taps, the signal of the $i$-th symbol at the $m$-th receiver branch is

$$\underline{r}_i^m[n] = \left( \sum_{k=1}^{K} \left( \sum_{\lambda=1}^{N_{CIR}} \underline{h}^{m,k}[\lambda] \underline{s}_i^k[n-\lambda] \right) \mathrm{e}^{j\Delta\varphi_i^{m,k}[n]} \right) + \underline{w}_i^m[n] \qquad (2)$$

where w is additive white Gaussian noise.

The phase rotation error between the up and down conversion process on the link between the $k$-th user and the $m$-th receiver station is $\Delta\varphi^{m,k} = \varphi^k - \varphi^m$. $\varphi$ in general is referred to as phase noise, whereas here we relate to the carrier frequency offset (CFO) impact such that $\Delta\varphi_i^{m,k}[n]$ can be defined as a linear phase process for each link as

$$\Delta\varphi_i^{m,k}[n] = 2\pi \, \Delta f^{m,k} \; n \; T_S + \varphi_0^{m,k} \qquad (3)$$

For a general system model the carrier frequency offset CFO $\Delta f^{m,k}$ is normalized to subcarrier spacing $B_{SC}$ which leads with $nT_S = n/NB_{SC}$ to

$$\Delta\varphi_i^{m,k}[n] = 2\pi \, \Delta\epsilon^{m,k} \; \frac{n}{N} + \varphi_0^{m,k} \qquad (4)$$

with

$$\Delta \epsilon^{m,k} = \Delta f^{m,k} / B_{SC}.$$

If OFDM symbols are transmitted consecutively φ₀ is given as $\varphi_0 = \Delta \varphi_{i-1}^{m,k}[N-1]$ . The channel impulse response $h^{m,k}$ is modeled such that $\sigma_h^2 = \epsilon\{\sum |h_\lambda^{m,k}|^2\}$ , wherein $\sigma_h^2$ is the mean power of the channel taps as determined by channel estimator block 163, , where the $h_\lambda^{m,k}$ are independent and identically Rayleigh distributed channel coefficients. In the following the OFDM symbol index $i$ is omitted. With $l \in D$ the received signal at the $l$-th subcarrier in the frequency domain is obtained by a discrete Fourier transformation (DFT), that is

$$\underline{Y}^m[l] = \frac{1}{\sqrt{N}} \sum_{n=0}^{N-1} \underline{r}^m[n]\, e^{\frac{-j2\pi l n}{N}} \qquad (5).$$

Subsequently vector matrix notation is used to simplify the transmission model. With Fourier transform matrix **F** and the link CFO matrix $\boldsymbol{\Phi}^{m,k} = diag\left(e^{j\Delta\varphi^{m,k}[n]}\right)$ , where $\boldsymbol{\Phi}^{m,k} \in \mathbb{C}^{N \times N}$ , equation (5) can be written as

$$\underline{Y}^m = F\left(\sum_{k=1}^K \left(\boldsymbol{\Phi}^{m,k} \underline{h}^{m,k} \otimes \underline{s}^k\right) + \underline{w}^m\right) \qquad (6)$$

$$\underline{Y}^m = \sum_{k=1}^K \underbrace{F \boldsymbol{\Phi}^{m,k} F^H}_{E^{m,k}} \underbrace{F \underline{h}^{m,k} F^H}_{H^{m,k}} \underline{X}^k + F \underline{w}^m \qquad (7)$$

and in stacked form

$$\underline{Y}^m = \begin{bmatrix} E^{m,1} & H^{m,1} & \dots E^{m,K} & H^{m,K} \end{bmatrix} \underline{X}' + \underline{W}^m \qquad (8)$$

$$\underline{Y}' = E'H'\underline{X}' + \underline{W}' \qquad (9)$$

with $\boldsymbol{E',H'} \in \mathbb{C}^{(NM)\times(NK)}$ , the user symbol vector $\underline{X}' = [\underline{X}^1...\underline{X}^K]^T$ and the receiver vector $\underline{Y}' = [\underline{Y}^1...\underline{Y}^K]^T$ .

In this way user data symbols in frequency domain representation $\underline{Y}^m$ can be calculated in the forward path of the decision feedback equalizer, i.e. in blocks 142 and 143 according to equation (7) or (8), wherein $E^{m,k}$ represents the estimated channel offset of the $k$ -th user at the $m$ -th receiver and $H^{m,k}$ represents the estimated channel of the $k$ -th user to the $m$ -th receiver, $\underline{X}^k$ represents the symbol sent by the $k$ -th user over said channel and $\underline{w}^m$ represents the Gaussian noise of said channel at the m -th receiver.

With $F F^H = I_N$ , the unitary similarity transformation of $\Phi^{m,k}$ is used and the elements in $\boldsymbol{E}^{m,k}$ are stated as

$$E^{m,k}[l,p] = \frac{1}{N} \sum_{n=0}^{N-1} e^{j\Phi\varphi^{m,k}[n]} \; e^{\frac{j2\pi n}{N}(p-l)} \tag{10}$$

or equivalently as Dirichlet kernel

$$E^{m,k}[l,p] = \begin{cases} 1 & \text{for } \kappa = 0 \\ \dfrac{1}{N} e^{j\pi\kappa\frac{N-1}{N}} \dfrac{\sin(\pi\kappa)}{\sin\dfrac{(\pi\kappa)}{N}} & \text{otherwise} \end{cases} \tag{11}$$

with $\kappa = \Delta \in^{m,k} + p\text{-}l \; \forall \; l, \; p = 1\dots N$, wherein $l$ represents the index of the subcarrier of interest and $p$ represents an adjacent subcarrier impacting the $l$-th subcarrier. Based on this model, the frequency domain transmission of equation (6) can be rewritten for the $l$-th subcarrier to

$$\underline{Y}^m[l] = \sum_{k=1}^{K} \left( \underbrace{\sum_{p\in D} E^{m,k}[l,p] H^{m,k}[p,p]}_{\tilde{H}^{m,k}[l,p]} \underline{X}^k[p] \right) + \underline{W}[l]$$

$$\underline{Y}^m[l] = \sum_{k=1}^{K} \left( \tilde{H}^{m,k}[l,l]\underline{X}^k[l] \right) + \underbrace{\sum_{k=1}^{K} \left( \sum_{p\in D,\, p\neq l} \tilde{H}^{m,k}[l,p]\underline{X}^k[p] \right)}_{Y_{ICI}} + \underline{W}[l] \tag{12}$$

In equation (12) $\tilde{H}^{m,k}[l,p]$ represents the effective transmission channel in the frequency domain. The first term of equation (12) represents the inter channel interference (ICI) free spatial multiplexing signal transmission with a user common phase error (CPE) term $E^{m,k}[l,l]$ which causes an additional phase increment of the channel of one OFDM symbol. The second term of equation (12), denoted $Y_{ICI}$, includes self and multiuser ICI, which destroys the orthogonality of the subcarrier symbols $\underline{X}^k[l]$ and leads to amplitude and phase errors of received symbols.

Considering the signal to interference and noise ratio (SINR), term $Y_{ICI}$ of equation (12) represents the impact of the intercarrier interference of all other carrier frequencies on the $l$-th received subcarrier of receiver branch $m$. As mentioned above in equations (7) and (8) in case of randomized transmit symbols the first term in equation (12) is uncorrelated to $Y_{ICI}$. Accordingly the SINR on the $l$-th subcarrier at the $m$-th receiver branch is given as

$$SINR_l^m = \frac{\sum_{k=1}^{K} \epsilon\left\{\left|E^{m,k}[l,l]\right|^2\right\}\sigma_h^2\sigma_X^2}{\underbrace{\sum_{k=1}^{K}\sum_{p\in D,\, p\neq l} \epsilon\left\{\left|E^{m,k}[l,p]\right|^2\right\}\sigma_h^2\sigma_X^2 + \sigma_W^2}_{y_l^{m,k}}} \tag{13}$$

In the numerator the common phase error (CPE) in equation (13) is fully compensated by the receiver algorithms.

For the ICI power estimation of $y_l^{m,k}$ results can be calculated using a conventional method wherein the ICI power is a sum over the interference power from adjacent subcarriers affecting subcarrier 1 with mean channel power and mean transmitted signal power. $y_l^{m,k}$ can be expressed as $\epsilon\{Y_{ICI} \quad Y_{ICI}^H\}$ as

$$y_l^{m,k} = \sum_{p \in D,\, p \neq l} \epsilon\{\|\boldsymbol{E}^{m,k}[l,p]\|^2\} \sigma_h^2 \sigma_X^2 = \sigma_h^2 \sigma_x^2 \left(1 - \epsilon\{\|\boldsymbol{E}^{m,k}[l,l]\|^2\}\right) \qquad (14)$$

With E as defined in equation (11), the $y_l^{m,k}$ as defined in equation (14) can be written as

$$y_l^{m,k} = \sigma_h^2 \sigma_X^2 \left(1 - \frac{1}{N^2}\frac{\sin^2(\pi \Delta \epsilon^{m,k})}{\sin^2(\pi/N \Delta \epsilon^{m,k})}\right) \qquad (15)$$

Considering sin $(\pi/N \Delta \in^{m,k}) \approx \pi/N \Delta\in^{m,k}$ for large N the inter channel interference (ICI) power can be approximated with

$$y_l^{m,k} = \sigma_h^2 \sigma_h^2 \cdot [1 - sinc^2(\pi \Delta \epsilon^{m,k})^2]$$

$$sinc^2(\pi \Delta \epsilon^{m,k}) = \left(\sum_{r=0}^{\infty}(-1)^r \frac{(\pi \Delta \epsilon^{m,k})^{2r}}{(2k+1)!}\right)^2 \approx 1 - 2 \cdot \frac{(\pi \Delta \epsilon^{m,k})^2}{(3)!}$$

Accordingly we find for the ICI power

$$y_l^{m,k} \approx \sigma_h^2 \sigma_X^2 \cdot (\pi \Delta \epsilon^{m,k})^2 / 3 \qquad (16)$$

wherein $\Delta \in^{m,k}$ is an approximately quadratic factor. Equation (16) gives a convenient term to be evaluated in algorithms for compensating carrier frequency offsets. In particular the calculation of the interference power of the l-th subcarrier can be calculated according to this equation in subcarrier selection block 144.

Further, from equation (13) it is derived that in a multi-user MIMO system the interference power of each link superimposes the other links, i.e. in case of a carrier frequency offset between the carrier frequencies the interference power of each carrier frequency superimposes on each other carrier frequency, and that the resulting approximated ICI power at one receiver branch can be obtained by

$$\sigma_{ICI,m}^2 = \sum_{k=1}^{K} y_l^{m,k} \qquad (17)$$

This estimated interchannel interference, i.e. the carrier offset interference, is calculated in subcarrier selection block 144 according to equation (17).

Equation (13) furthermore reveals that the joint noise and interference term at each subcarrier comprises $\sigma^2_{Y,m} = \sigma^2_{ICI,m} + \sigma^2_W$, that is the joint noise and interference comprises the average white Gaussian noise power and the interference power of the $l$-th subcarrier. Further, equation (16) reveals that the inter-channel interference noise $\sigma^2_{ICI,m}$ can vary according to the distribution $\Delta \epsilon^{m,k}$. So for each receiver branch $m$ or receiver station $m$ there is another effective noise term $\sigma^2_{Y,m}$.

As the mentioned above the transmitted data must be detected in the forward path of the DFE circuit, i.e. in particular the transmitted symbols are estimated in estimator 143, and the carrier frequency offsets (CFOs) must be detected for subsequently determining the interference impact caused by the CFOs.

For detecting the symbols the spatial layers must be detected, which requires the knowledge of the frequency errors at the receiving entity. The estimation of the multi-user CFO can be handled conventionally. Various conventional methods are known, also for a multi-user asynchronous OFDMA scheme. According to equation (10), the CPE can be seen and treated as mean phase rotation during one OFDM symbol. With equations (4) and (10) the CPE $\Delta\theta$ of the $i$-th OFDM symbol with respect to the CP on each link can be denoted as

$$\Delta\theta^{m,k}_i = \measuredangle E^{m,k}[l,l] = \measuredangle \left\{ \frac{1}{N} \sum_{n=0}^{N-1} e^{j\Delta\varphi^{m,k}_i[n]} \right\} = \measuredangle \left\{ \frac{1}{N} e^{j\pi\Delta\epsilon^{m,k}\frac{N-1}{N}} \frac{\sin(\pi\Delta\epsilon^{m,k})}{\sin\left(\frac{\pi\Delta\epsilon^{m,k}}{N}\right)} \underbrace{e^{j2\pi\Delta\epsilon^{m,k}i(1+\frac{N_{CP}}{N})}}_{\Delta\varphi^{m,k}_i[0] = \Delta\varphi^{m,k}_{i-1}[N-1]} \right\} \qquad (18)$$

As a result for every link on different subcarriers an equal but over more than one OFDM symbol a changing CPE occurs. Normally, this is an additional phase offset on each OFDM symbol, which will be inherently estimated by the channel estimation process and will also be taken into account during the equalization process by estimating the spatial decorrelation filter $G$. Alternatively the CPE impact on the channel can be directly obtained from the multiuser CFO estimates and can be developed conventionally into a time series.

In the following perfect knowledge of the CFO and CPE for each link is assumed.

Based on equation (12) two possible user layer detection strategies are possible as described in the following, wherein the following description and mathematical derivations are always denoted for the $l$-th subcarrier and for a number of $K$ users and a number of $M$ receiver stations.

In one embodiment the spatial layer detection is performed with common phase error (CPE) correction. As mentioned above intercarrier interference at one particular receiving branch $m$ can be interpreted and treated as additional noise with $\sigma^2_{ICI,m}$. Apparently in the case of low ICI the thermal noise floor is stronger than the portion caused by the ICI. In cellular systems, such as in cell phone systems, we suppose that the CFO is partially compensated at the terminal side, such that the assumption of low ICI holds. However, the CPE phase de-rotation cannot be neglected as the phase error leads to performance degradations. With equation (18) a matrix containing all link CPEs in the $i$- the OFDM symbol can be derived from the measured CFOs, which is

$$\Delta\theta_i = \begin{bmatrix} e^{j\Delta\theta^{1,1}_i} & \cdots & e^{j\Delta\theta^{1,K}_i} \\ \vdots & \ddots & \ddots \\ e^{j\Delta\theta^{M,1}_i} & \cdots & e^{j\Delta\theta^{M,K}_i} \end{bmatrix} \qquad (19)$$

$\Delta\theta_i$ is inherently superimposed thus leading to the effective channel $\tilde{H}$. Due to the nature of the phase difference matrix, the time variant channel can be decomposed in a static part and a dynamic phase rotation part. Then we can simplify the channel inversion having the consequence that due to the static part a continuous tracking is not necessary.

With the equations

$$\widetilde{\boldsymbol{H}}_i = \theta_{i,R} \, \boldsymbol{H} \, \theta_{i,T} = \boldsymbol{H}_i . \Delta\theta_i \qquad (20)$$

$$\widetilde{\boldsymbol{H}}_i^{-1} = \theta_{i,T}^{-1} \, \boldsymbol{H}^{-1} \, \theta_{i,R}^{-1} = \boldsymbol{H}^{-1} . \Delta\theta_i^H \qquad (21)$$

$$= \boldsymbol{G} . \Delta\theta_i^H \qquad (22)$$

the effective channel can be inverted in a low complexity manner. Note that mathematical operator "." , i.e. a dot, denotes the element wise matrix product. Hence, multiuser detection filters can be applied with restriction to the coupled channel model according to transmission equation

$$\widehat{\underline{X}}_i = \boldsymbol{G} . \Delta\theta_i^H \; \underline{Y}_i = \boldsymbol{G} . \Delta\theta_i^H (\Delta\theta_i . \boldsymbol{H} \, \underline{X}_i + \widetilde{\underline{W}}_i) \qquad (23)$$

where $\underline{\widetilde{W}}$ is the effective noise vector and $\widehat{\underline{X}}_i$ represents an estimation of a sent $i$-th symbol. It is known that the maximum likelihood detector yields the optimum results by minimizing the error of $\underline{Y}$-$\boldsymbol{H}\,\underline{S}$ .Therefore, the optimum detector can be achieved using the equation

$$\widehat{\underline{X}}_i = \underline{X}_i + \underline{W}_i = \underset{X_i}{arg\,min} \{ \| \underline{Y}_i - \boldsymbol{H} . \Delta\theta_i \underline{Y}_i \|^2 \} \qquad (24)$$

Furthermore we derive a maximum mean squared error (MMSE) filter with the ICI extension

$$\boldsymbol{G} = \boldsymbol{H}^H \left( \boldsymbol{H}\boldsymbol{H}^H + \frac{1}{\sigma_s^2} diag(\underline{\sigma}_{Y,m}^2) \right)^{-1} \qquad (25)$$

wherein $\underline{\sigma}_{Y,m}^2$ represents an effective noise vector with elements for each receiver station. With equation (23) after extraction of the $k$-th row of $\boldsymbol{G}$ and the $k$-th column of $\theta_i^H$ , it is possible to equalize the transmit symbols of the k-th user $\widetilde{X}_i^k$ using

$$\widetilde{X}_i^k = \boldsymbol{G}^T \lfloor k ; : \rfloor \Delta\theta_i^H \lfloor : ; k \rfloor \underline{Y}_i \qquad (26)$$

wherein $\boldsymbol{G}^T[k;:]$ denotes all elements in the $k$-th row of $\boldsymbol{G}^T$ and $\theta_i^H [ : ; k ]$ denotes all elements of the $k$-th column of $\theta_i^H$ .

This equation directly allows successive interference cancellation of the spatial layers wherein already detected spatial symbols $X_i^k$ are subtracted from the received signals iteratively as described above in a plurality of iteration cycles, that is

$$\underline{Y}_i^z = \underline{Y}_i^{z-1} - \left( \boldsymbol{H}[:,k]\Delta\theta_i[:,k] \ \widetilde{X}_i^k \right) \ , \ k=1,\ldots,K \ ; \ z=1,\ldots,K \ ; \ z \neq k \quad (27)$$

wherein $z$ denotes a desired user on subcarrier $l$ and index $k$ denotes other users using the same subcarrier $l$, and wherein $\widetilde{X} = Q(\hat{X})$ implements the symbol decision of the current user data to avoid error propagation at the interference reduction stage. This can be accomplished by decoding the information bits and remodulate the estimated symbols. In this context robust decoding techniques can be exploited to increase the system performance. For example the GENIE approach is used here where always the perfect known symbols are canceled. Furthermore, depending on the largest layer SINR, the order of the detection process can be modified, which results in an additional permutation of the user layers.

The detection of the layer can be performed including the correction or at least the reduction of inter channel interference (ICI). Based on the first signal detection step it is further possible to reduce the remaining interference. Already detected symbols will be remodulated and feed back in order to estimate the intercarrier interference $Y_{ICI}$, which is subtracted before the channel equalization is applied again.

In a system with limited processing resources in the feedback path only adjacent, but strongest interfering, subcarriers are taken into account for reducing the interchannel interference, wherein the selection of considered subcarriers depends on

$$\alpha^{[m,k]} = \left\lfloor \frac{\gamma_l^{m,k}}{\sigma_{ICI,m}^2} \cdot \alpha_{max} \right\rfloor \qquad (28)$$

wherein $\alpha$ is the number of considered interfering subcarriers and $\alpha^{m,k}=0,1, \ldots, N/2-1$ , $\alpha_{max} \in [0:1:(N/2-1) \cdot KM]$.

Considering now above given equations (12) and (23), the iterative scalable decision feedback equalization (DFE) scheme can be written as

$$\widehat{\underline{X}}_i^t = \boldsymbol{G}^t . \Delta\theta_i^H \left( \underline{Y}_i - \widehat{\underline{Y}}_{ICI,i}^{t-1} \right) \qquad (29)$$

with

$$\widehat{\underline{Y}}_{ICI,i}^{m,t-1} = \sum_{k=1}^{K} \sum_{\substack{p=l-\alpha^{m,k} \\ p \in D, p \neq l}}^{p=l+\alpha^{m,k}} \widetilde{\boldsymbol{H}}^{m,k}[l,p] \ \widetilde{X}_i^{k,t-1}[p] \quad (30)$$

as the ICI estimate on the $l$-th subcarrier and $t$ as iteration numbering. For further simplification the processing entity, i.e. the processing resource in the feedback path of the DFE, can evaluate $\gamma_l^{m,k}$ and $\sigma_{ICI,m}^2$ fairly easily, if the linear approximations derived as above are used, i.e. particularly when under consideration of equation 16 as above. Note that the noise variance in $\boldsymbol{G}^t$ changes to $\left( \sigma_w^2 / \sigma_s^2 \right) \boldsymbol{I}_M$ in the interference reduction steps.

In one embodiment above mentioned calculations may be performed using conventional digital signal processors (DSP), wherein a DSP may be implemented by a general purpose processor. Alternatively application specific integrated circuits (ASICs) may be deployed for implementing the method. However in one embodiment the described method may be implemented using conventional hardware, wherein the method steps are implemented in program code executable in a receiver of an OFDM system.

**Claims**

1. A method for reducing symbol detection error in an OFDM communication system comprising the steps of

   - receiving a plurality of OFDM subcarrier signals in the receiver,
   - estimating symbols of the subcarriers,
   - estimating an interference on one subcarrier caused by received subcarriers,
   - selecting from the plurality of received subcarriers at least the most interfering subcarrier,
   - subtracting the estimated interference of the at least selected subcarrier from the received subcarrier signals thus producing subcarrier signals of reduced interference, and
   - estimating symbols of the subcarrier signals of reduced interference.

2. The method of claim 1, further comprising the step of estimating the channel characteristics for each received subcarrier.

3. The method of claim 2, wherein the step of estimating an interference on the one subcarrier is based on the estimated channel characteristics.

4. The method of any preceding claim, wherein the step of estimating symbols of subcarriers comprises spatial detection of subcarriers.

5. The method of any preceding claim, wherein the step of selecting from the plurality of received subcarriers at least the most interfering subcarrier comprises the step of calculating the accumulated interference power of subcarriers, calculating the ratio of interference power of single subcarriers to the accumulated interference power, and selecting subcarriers exhibiting the highest ratio.

6. The method of any preceding claim, further comprising the step of dynamically allocating processing resources corresponding to the number of selected subcarriers.

7. The method of any preceding claim, wherein the OFDM system is a cell phone system.

8. A receiver in an OFDM communication system comprising a decision feedback equalizer (DFE) for reducing the interference on one of a plurality of received subcarriers caused by subcarriers, wherein the DFE forward path comprises means for estimating symbols of a plurality of received subcarriers, and wherein the DFE feedback path comprises means for estimating the interference of subcarriers on a single subcarrier and for selecting at least the most interfering subcarrier, and comprising means for subtracting the at least most interfering estimates from a received subcarrier.

9. The receiver of claim 8, wherein the feedback path comprises a feedback filter for estimating the interference of subcarriers on a single subcarrier and a subcarrier selection unit communicatively coupled to the feedback filter, wherein the subcarrier selection unit is communicatively coupled to the output of the forward path.

10. The receiver of any preceding claim 8 to 9, further comprising means for estimating the frequency offset of a subcarrier.

11. The receiver of any preceding claim 8 to 10, further comprising a channel estimation block for estimating an effective channel of a subcarrier, and wherein the channel estimation block is communicatively coupled to the feedback filter in the feedback path.

Fig. 1

**Europäisches Patentamt**
**European Patent Office**
**Office européen des brevets**

# EUROPEAN SEARCH REPORT

Application Number

EP 09 15 8674

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2006/153283 A1 (SCHARF LOUIS L [US] ET AL) 13 July 2006 (2006-07-13)<br>* paragraph [0008] *<br>* paragraph [0011] *<br>* paragraph [0015] *<br>* paragraph [0018] - paragraph [0019] *<br>* paragraph [0123] *<br>* paragraph [0126] *<br>* paragraph [0209] - paragraph [0211] *<br>----- | 1-11 | INV.<br>H04L25/02<br>H04L25/03<br>H04L27/26 |
| X | US 2002/146063 A1 (GOROKHOV ALEXEI [NL] ET AL) 10 October 2002 (2002-10-10)<br>* abstract *<br>* paragraph [0003] *<br>* paragraph [0007] *<br>* paragraph [0026] - paragraph [0028] *<br>* paragraph [0033] - paragraph [0034] *<br>* paragraph [0039] *<br>* paragraph [0048] - paragraph [0051] *<br>----- | 1-11 | |
| X | WO 00/60822 A (SIEMENS AG [DE]; ZIRWAS WOLFGANG [DE])<br>12 October 2000 (2000-10-12)<br>* abstract *<br>* page 1, line 3 - line 12 *<br>* page 5, line 30 - page 6, line 18 *<br>* page 8, line 6 - line 34 *<br>* page 11, line 6 - page 13, line 10 *<br>* page 14, line 21 - page 16, line 7 *<br>* page 20, line 1 - line 17 *<br>* page 21, line 10 - line 35 *<br>-----<br>-/-- | 1-11 | **TECHNICAL FIELDS SEARCHED (IPC)**<br>H04L |

The present search report has been drawn up for all claims

| Place of search | Date of completion of the search | Examiner |
|---|---|---|
| Munich | 4 November 2009 | Palacián Lisa, Marta |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**EUROPEAN SEARCH REPORT**

Application Number

EP 09 15 8674

| | **DOCUMENTS CONSIDERED TO BE RELEVANT** | | |
|---|---|---|---|
| Category | Citation of document with indication, where appropriate, of relevant passages | Relevant to claim | CLASSIFICATION OF THE APPLICATION (IPC) |
| X | EP 1 478 149 A (FUJITSU LTD [JP]) 17 November 2004 (2004-11-17) * abstract * * paragraph [0001] * * paragraph [0018] - paragraph [0019] * * paragraph [0022] * * paragraph [0025] - paragraph [0026] * * paragraph [0030] * * paragraph [0038] * * paragraph [0042] - paragraph [0043] * * paragraph [0045] * * paragraph [0057] * ----- | 1-3,6 | |
| X | EP 1 624 633 A (FUJITSU LTD [JP]) 8 February 2006 (2006-02-08) * paragraph [0015] * * paragraph [0018] - paragraph [0020] * * paragraph [0039] - paragraph [0046] * * paragraph [0064] - paragraph [0065] * * paragraph [0103] * ----- | 1-3,5-8 | |
| | | | TECHNICAL FIELDS SEARCHED (IPC) |

The present search report has been drawn up for all claims

| Place of search | Date of completion of the search | Examiner |
|---|---|---|
| Munich | 4 November 2009 | Palacián Lisa, Marta |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 2 244 432 A1**

**ANNEX TO THE EUROPEAN SEARCH REPORT
ON EUROPEAN PATENT APPLICATION NO.**

EP 09 15 8674

This annex lists the patent family members relating to the patent documents cited in the above-mentioned European search report.
The members are as contained in the European Patent Office EDP file on
The European Patent Office is in no way liable for these particulars which are merely given for the purpose of information.

04-11-2009

| Patent document cited in search report | | | Publication date | Patent family member(s) | | | Publication date |
|---|---|---|---|---|---|---|---|
| US 2006153283 | A1 | | 13-07-2006 | NONE | | | |
| US 2002146063 | A1 | | 10-10-2002 | CN | 1462531 | A | 17-12-2003 |
| | | | | WO | 02067527 | A2 | 29-08-2002 |
| | | | | JP | 2004519900 | T | 02-07-2004 |
| WO 0060822 | A | | 12-10-2000 | DE | 19914797 | A1 | 26-10-2000 |
| | | | | EP | 1163772 | A1 | 19-12-2001 |
| EP 1478149 | A | | 17-11-2004 | JP | 4121407 | B2 | 23-07-2008 |
| | | | | JP | 2004289475 | A | 14-10-2004 |
| | | | | US | 2004184550 | A1 | 23-09-2004 |
| EP 1624633 | A | | 08-02-2006 | CN | 1731778 | A | 08-02-2006 |
| | | | | DE | 602004011208 | T2 | 02-01-2009 |
| | | | | JP | 2006050253 | A | 16-02-2006 |
| | | | | KR | 20060013326 | A | 09-02-2006 |
| | | | | US | 2006029143 | A1 | 09-02-2006 |

EPO FORM P0459

For more details about this annex : see Official Journal of the European Patent Office, No. 12/82

17